Europäisches Patentamt

European Patent Office

Office européen des brevets

(11) Publication number: **0 121 358**
**B1**

(12) **EUROPEAN PATENT SPECIFICATION**

(45) Date of publication of patent specification: **12.07.89**

(21) Application number: **84301509.0**

(22) Date of filing: **07.03.84**

(51) Int. Cl.⁴: **A 22 B 5/08**

(54) An apparatus for the surface treatment of carcasses.

(30) Priority: **07.03.83 DK 1107/83**

(43) Date of publication of application:
**10.10.84 Bulletin 84/41**

(45) Publication of the grant of the patent:
**12.07.89 Bulletin 89/28**

(84) Designated Contracting States:
**DE GB NL SE**

(56) References cited:
**GB-A-1 082 063**

(73) Proprietor: **JUTLAND SLAGTERIERNE**
**Braarupgade 3**
**DK-7800 Skive (DK)**

(72) Inventor: **Vium, Bjarne**
**Stokrosevej 14**
**DK-7800 Skive (DK)**

(74) Representative: **Alexander, Thomas Bruce et al**
**Boult, Wade & Tennant 27 Furnival Street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an apparatus, for the surface treatment of carcasses conveyed mechanically suspended from their hind legs, comprising at least one surface treating device, such as a brushing and/or scraping device, for treatment of a specific surface part on the exterior or interior of such carcass.

After scalding, dehairing and singeing, pig carcasses are subjected to a number of mechanical or manual surface treatments in order to achieve a clean rind surface of uniform appearance.

Known apparatus for such surface treatments, however, have proved inadequate for use with carcasses which although of substantially even weight are of varying length, and there has been a sharply increasing trend toward varying the length of porkers in recent years. As an example, the so-called Danish Landrace pig is being replaced for reasons of production economy by, or crossed with, four or five other breeds of pigs, to the effect that variation in length of Danish porkers is now as much as 50 cm in extreme cases, while the standard deviation is in the order of 5 to 10 cm.

Known apparatus with stationary surface treating devices designed to treat some specific surface part, such as forehead, neck, forelegs etc. of a carcass now and then will fail to treat the desired area, and it should be noted that the said variation in carcass length must be expected to show a further increase henceforth.

Accordingly, GB—A—1082063, discloses an apparatus, for the surface treatment of carcasses conveyed mechanically, suspended from their hind legs, comprising at least one surface treating device, for treatment of a specific surface part of the exterior or interior of each carcass, and a detector co-operating with a part of each carcass and capable, via adjusting means, of automatically adjusting the operating level of the surface treating devices in accordance with the carcass length determined by the detector.

This apparatus includes a feeler member which co-operates with the pigs head and is capable of — via an adjustment mechanism — automatically adjusting the level of the brush discs in accordance with the varying lengths of different pigs.

However, according to the invention there is provided such apparatus characterised in that the detector comprises a device movable upwards and downwards and having an upper part which is formed as a horizontal beam for detecting the level of the forelegs of each carcass by contact from below with said forelegs, the operating level of one or more of the surface treating devices being adjusted in accordance with the level detected.

This provides a simple and efficient method of determining the length of each carcass, as the forelegs are centrally positioned in relation to the working areas of a number of the surface treating devices.

In modern bacon factories, each carcass is transported suspended from a gambrel, and is normally conveyed with a specific orientation relative to the travelling direction.

In a further embodiment, in which the carcasses are suspended in gambrels, the upper surface of the beam facing the forelegs of the carcasses consists of electrically conductive material which is insulated from the beam, said material forming one electrode in an electric detector circuit, while the gambrel forms the other electrode in said circuit.

This will result in reliable electrical detection of the detector having contacted the forelegs, this being preferably to a direct mechanical contact pressure detection which can cause uncertain detection, and at times has the effect of pushing a carcass aside or down from the gambrel.

As the detector usually starts from below from a given initial position when a carcass to be measured is within a given interval in terms of time and/or horizontal distance from the detector, this has the effect that a long carcass will be detected more quickly than a short one, and due to the normally steady travelling speed of the carcasses, a long or a short carcass will not as a result have the same horizontal position in relation to the detector. For this reason in particular it has proved advantageous to use a detection beam having an upper surface with a length substantially greater than the normal horizontal spacing between the forelegs of a carcass.

In a further embodiment the detector device and adjusting means comprise a row of pins, such as bolts, with uniform, or concordant lateral, spacing, and a stationary counter actuated by upward and downward movement of the row of pins, this measuring length and making any necessary adjustment of the operating level, and if desired of the operating range, of the surface treating devices.

This structure has proved to be extremely simple and reliable in the very damp and hot slaughterhouse climate.

An apparatus according to the invention, for brushing with horizontal rotating brush rollers, may comprise a forehead brushing device, an opposing frontbreast brushing device, a neck brushing device following the forehead brushing device in the direction of carcass movement, an opposing foreshank-neck brushing device, a device for turning each gambrel through 180°, and a further foreshank-neck brushing device following the neck brushing device.

The extremely compact embodiment defined above comprising a combination of surface treating devices has proved adequate for the achievement of completely clean carcasses, without any supplementary manual treatment.

It has proved advantageous from the viewpoint of control techniques, but more important in terms of treatment efficiency, to cause the surface treating devices to move — after completed treatment of a given carcass — to an upper or lower initial position prior to adjustment to the next carcass length. This has proved particularly important with regard to treatment of the forelegs.

Accordingly, in a further embodiment at least one of the surface treating devices is adapted to be moved to an upper or lower initial position after treatment of any given carcass and more specifically, the front-breast brushing device may be adapted to be moved to an upper initial position, while the other brushing devices are adapted to be moved to a lower initial position after treatment of any given carcass.

After adjustment in accordance with carcass length at least one surface treating device may be moved up and down during treatment of any given carcass.

Furthermore, the amplitude of the movement of said device upwards and downwards may be determined in accordance with the carcass length measured.

The above mentioned embodiments have proved especially advantageous in connection with mill scraping of the ham of carcasses, since although the variation in ham level from carcass to carcass is not all that great due to its proximity to the suspension point, the vertical length of the ham itself has proved to vary concurrently with the variation in carcass length.

It should be noted that the detection of length in apparatus according to the invention may be used with the same advantage, for other operations such as interior cleaning of the neck of split pig carcasses, automatic removal of the foreleg hooves, in the longitudinal mechanical removal of the spinal marrow, and for branding and other stamping purposes.

The invention will now be described by way of example with reference to the drawings, in which:—

Figure 1 is a schematic elevational view of an apparatus according to the invention, comprising a length and five brushing devices controlled by the detector;

Figure 2 is a side view of the length detector of Figure 1 in the travelling direction of the pig carcasses; and

Figure 3 shows one of the five brushing devices of Figure 1, viewed as in Figure 2.

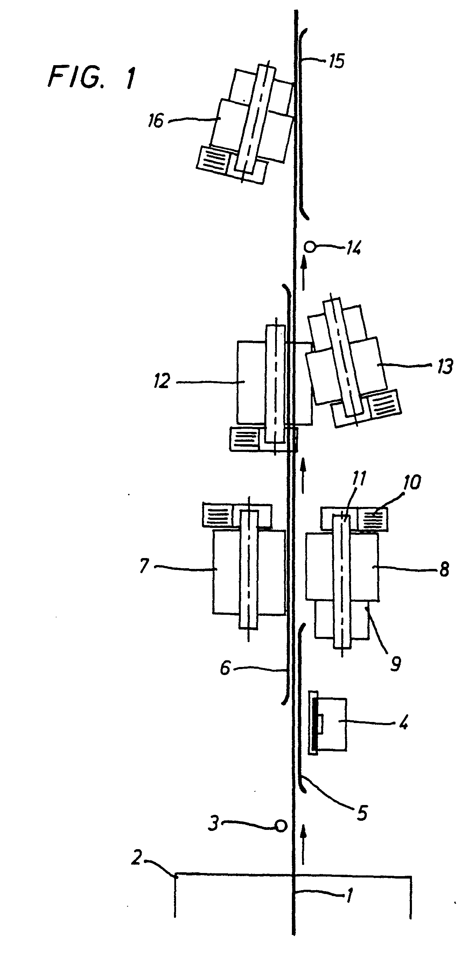

Figure 1 shows a sliding bar 1, a known scraping machine 2, a device 3 for turning gambrels, a length detector 4, a first gambrel guide rail 5, a second gambrel guide rail 6, a forehead brushing device 7, a front-breast brushing device 8 with double roller brush 9, a motor unit 10 and a suspension device 11, a neck brushing device 12, a "right" foreshank-neck brushing device 13, a device 14 for turning gambrels, a third gambrel guide rail 15 and a "left" foreshank-neck brushing device 16.

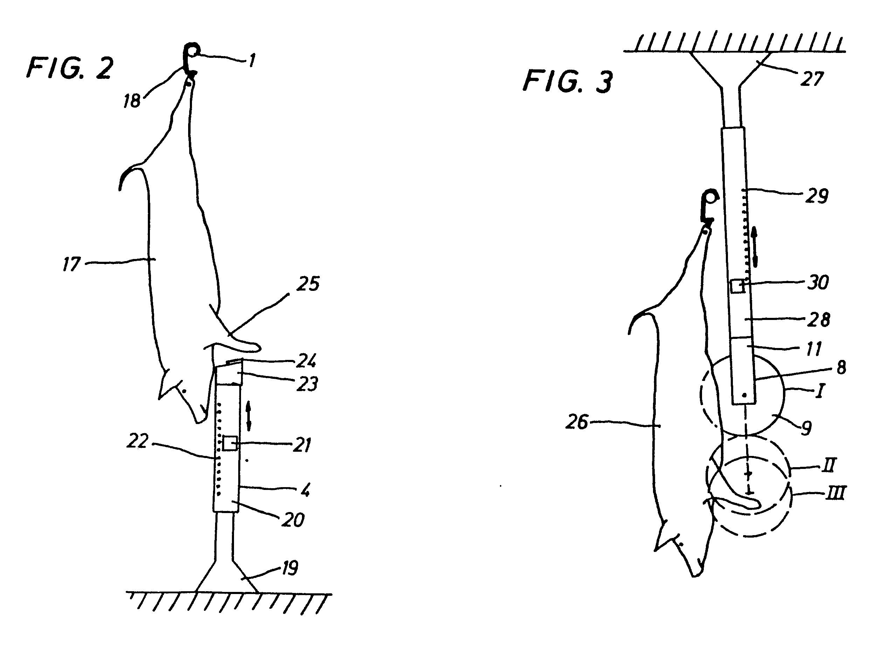

Figure 2 shows a pig carcass 17 suspended from a gambrel 18 which is mechanically conveyed on the sliding bar 1. Below this will be seen the length detector 4 which has a base 19 secured to the floor and an upper outer column 20 which is hydraulically movable up and down in relation to the base 19, thereby actuating by means of passing pins 22 a stationary electronic counter 21. At the top of the column 20 is a horizontal beam 23, whose upper surface has an electrically conductive blade 24 provided with a low-voltage potential in relation to the sliding bar 1, with the effect that there is established electric connection through the pig carcass 17 when the pig's forelegs 25 contact the beam 23.

Figure 3 shows a pig carcass 26, and, as an example, the front-breast brushing device 8. This device is secured to the ceiling by means of a suspension frame 27. The roller brush 9 itself hangs from the device 11 to which is secured an outer column 28 provided with pins 29.

The outer column 28 and with it the brush roller 9 are hydraulically movable in slightly inclined direction relative to the frame 27 which carries an electronic counter 30.

The apparatus shown functions as follows:

When a pig carcass leaves the scraping apparatus 2 with the back leading in Figure 1, it is turned through 90° left by the device 3 so that the forelegs are oriented to the right, in which position they are held by the first gambrel guide rail 5. When the carcass is moved past a given point, e.g. the device 3, the outer column 20 (Figure 2) of the length detector begins to move up toward the forelegs 25 of the pig carcass 17, while the counter 21 records the number of passed pins 22. When the electrically conductive blade 24 contacts the pig's forelegs 25, the recording of the counter 21 is stored, and the detector 4 instantly moves down again to its initial position, which is also the case if the electrically conductive blade 24 for some reason or other, e.g. missing pig or the like, has made no contact on its way to its top position.

The stored record of the pig carcass length, expressed by the distance from the slide bar 1 to the forelegs 25, is then correlated via a microprocessor to the relative position of the measured pig carcass on the sliding bar 1.

When the subject pig carcass has been advanced to be near the brushing device 8, the latter is moved toward an upper initial position, indicated by I (Figure 3). After this the device 8 is moved downwards to the specific positions II and II, these being determined by means of the counter 30 in accordance with the stored signal from the detector counter 21.

The device 8 will be reciprocated between positions II and III during the remainder of the processing cycle of the pig carcass at the device 8. At the same time, the device 7 (Figure 1) has completed its operating cycle, starting from a lower initial position prior to the desired length adjustment.

The pig carcass then moves on, being oriented as before due to the rail 6 (Figure 1), through the brushing devices 12 and 13, which are adjusted in similar manner, and the carcass is finally turned 180° by the device 14 and held in this position by means of the rail 15 during passage past the brushing device 16, the level of which is adjusted in a similar manner.

The system described above may be modified to extend the distance between II and III in case of long pigs, just as it will be possible to prolong the duration of a given processing cycle in a given device for a long pig carcass compared to a short one.

## Claims

1. An apparatus, for the surface treatment of carcasses conveyed mechanically, suspended from their hind legs, comprising at least one surface treating device, for treatment of a specific surface part of the exterior or interior of each carcass (17), and a detector (4) co-operating with a part of each carcass (17) and capable, via adjusting means, of automatically adjusting the operating level of the surface treating devices (7, 8, 12, 13, 16) in accordance with the carcass length determined by the detector (4), characterised in that the detector (4) comprises a device (20) movable upwards and downwards and having an upper part which is formed as a horizontal beam (23) for detecting the level of the forelegs (25) of each carcass (17) by contact from below with said forelegs (25), the operating level of one or more of the surface treating devices (7, 8, 12, 13, 16) being adjusted in accordance with the level detected.

2. An apparatus according to Claim 1, in which the carcasses (17) are suspended in gambrels (18), characterised in that the upper surface of the beam (23) facing the forelegs (25) of the carcasses consists of electrically conductive material (24) which is insulated from the beam, said material (24) forming one electrode in an electric detector circuit, while a gambrel (18) forms the other electrode in said circuit.

3. An apparatus according to Claim 2, characterised in that the upper surface of the beam (23) has a length substantially greater than the normal horizontal spacing between the forelegs (25) of a carcass.

4. An apparatus according to Claim 1, characterised in that the detector (4) and the adjusting means comprise a row of pins (22, 29) with uniform spacing, and a stationary counter (21, 30) actuated by upward and downward movement of the row of pins (22, 29).

5. An apparatus according to any preceding claim for brushing with horizontal rotating brush rollers, characterised in that the apparatus comprises a forehead brushing device (7), an opposing front-breast brushing device (8), a neck brushing device (12) following the forehead brushing device in the direction of carcass movement, an opposing foreshank-neck brushing device (13), a device (14) for turning each gambrel (18) through 180°, and a further foreshank-neck brushing device (16) following the neck brushing device (12).

6. An apparatus according to any preceding claim, characterised in that at least one surface treating device (7, 8, 12, 13, 16) is adapted to be moved to an upper or lower initial position after treatment of any given carcass.

7. An apparatus according to Claim 6 as dependent upon Claim 5, characterised in that the front-breast brushing device (8) is adapted to be moved to an upper initial position, while the other brushing devices (7, 12, 13, 16) are adapted to be moved to a lower initial position after treatment of any given carcass.

8. An apparatus according to any preceding claim, characterised in that after adjustment in accordance with carcass length at least one surface treating device (8) is moved up and down during treatment of any given carcass.

9. An apparatus according to Claim 8, characterised in that the amplitude of the movement of said device (8) upwards and downwards is determined in accordance with the carcass length measured.

## Patentansprüche

1. Vorrichtung für die Oberflächenbehandlung von mechanisch transportierten Schlachttierkörpern, die an ihren Hinterbeinen aufgehängt sind, mit mindestens einer Oberflächenbehandlungsvorrichtung für die Behandlung eines besonderen Oberflächenteils außen oder innen an jedem Schlachttierkörper (17), und mit einem Detektor (4), der mit einem Teil jedes Schlachttierkörpers (17) zusammenarbeitet und über eine Einstellvorrichtung in der Lage ist, die Arbeitshöhe der Oberflächenbehandlungsvorrichtungen (7, 8, 12, 13, 16) in Übereinstimmung mit der durch den Detektor (4) festgestellten Länge des Schlachttierkörpers automatisch einzustellen, dadurch gekennzeichnet, daß der Detektor (4) eine Vorrichtung (20) aufweist, die nach oben und unten beweglich ist und einen oberen Teil aufweist, der als ein horizontaler Balken (23) für des Erfassen der Höhe der Vorderbeine (25) jedes Schlachttierkörpers durch Anlage an den Vorderbeinen (25) von unten ausgebildet ist, wobei die Arbeitshöhe einer oder mehrerer der Oberflächenbehandlungsvorrichtungen (7, 8, 12, 13, 16) entsprechend der erfaßten Höhe einstellbar ist.

2. Vorrichtung nach Anspruch 1, wobei die Schlachttierkörper in Fleischerhaken (18) ausgehängt sind, dadurch gekennzeichnet, daß die obere Oberfläche des Balkens (23), die den Vorderbeinen (25) der Schlachttierkörper zugewandt sind, aus elektrisch leitfähigem Material (24) besteht, das von dem Balken isoliert ist, wobei das Material (24) eine Elektrode in einem elektrischen Detektorschaltkreis bildet, während ein Fleischerhaken (18) die andere Elektrode in dem Schaltkreis bildet.

3. Vorrichtung nach Anspruch 2, dadurch gekennzeichnet, daß die obere Oberfläche des Balkens (23) eine Länge aufweist, die erheblich größer als der normale horizontale Abstand zwischen den Vorderbeinen (25) eines Schlachttierkörpers ist.

4. Vorrichtung nach Anspruch 1, dadurch gekennzeichnet, daß der Detektor (4) und die Einstellvorrichtung eine Reihe von Stiften (22, 29) mit einheitlichem Abstand und einem stationären Zähler (21, 30) aufweisen, der durch die Aufwärts-und die Abwärtsbewegung der Reihe von Stiften (22, 29) betätigt wird.

5. Vorrichtung nach einem der vorhergehenden Ansprüche für das Bürsten mit sich borizontal drehenden Bürstenwalzen, dadurch gekennzeichnet, daß die Vorrichtung mindestens eine Vorderkopf-Bürstvorrichtung (7), eine gegenüberliegende Vorderbrust-Bürstvorrichtung (8), eine Nacken-Bürstvorrichtung (12), die der vorderkopf-Bürstvorrichtung in der Richtung der Bewegung des Schlachttierkörpers folgt, eine gegenüberliegende Vorderschenkel-Nacken-Bürstvorrichtung (13), eine Vorrichtung (14) für das Drehen jedes Fleischerhakens (18) um 180° und eine weitere Vorderschenkel-Nacken-Bürstvorrichtung (16), die der Nacken-Bürstvorrichtung (12) folgt, aufweist.

6. Vorrichtung nach einem der vorhergenden Ansprüche, dadurch gekennzeichnet, daß mindestens eine Oberflächenbehandlungsvorrichtung (7, 8, 12, 13, 16) so ausgelegt ist, daß sie nach Behandlung des beliebigen vorgegebenen Schlachttierkörpers in eine obere oder untere Startposition bewegt wird.

7. Vorrichtung nach Anspruch 6 in Abhängigkeit von Anspruch 5, dadurch gekennzeichnet, daß die Vorderbrust-Bürstvorrichtung (8) so ausgelegt ist, daß sie in eine obere Startposition bewegt wird, während die anderen Bürstvorrichtungen (7, 12, 13, 16) so ausgelegt sind, daß sie nach der Behandlung eines beliebigen vorgegebenen Schlachttierkörpers in eine untere Startposition bewegt werden.

8. Vorrichtung nach einem der vorhergehenden Ansprüche, dadurch gekennzeichnet, daß nach Einstellung entsprechend der Länge des Schlachttierkörpers mindestens eine Oberflächenbehandlungsvorrichtung (8) während der Behandlung eines beliebigen vorgegebenen Schlachttierkörpers auf- und abwärts bewegt wird.

9. Vorrichtung nach Anspruch 8, dadurch gekennzeichnet, daß die Amplitude der Aufwärts- und Abwärtsbewegung der Vorrichtung (8) entsprechend der gemessenen Länge des Schlachttierkörpers festgelegt wird.

**Revendications**

1. Appareil pour le traitement superficiel de carcasses d'animaux transportées mécaniquement, suspendues par les pattes postérieures, comprenant au moins un dispositif de traitement superficiel, pour le traitement d'une partie de surface particulière de l'extérieur ou de l'intérieur de chaque carcasse (17), et un détecteur (4) coopérant avec une partie de chaque carcasse (17) et susceptible de régler automatiquement, par la voie de moyens de réglage, le niveau de fonctionnement des dispositifs de traitement superficiel (7, 8, 12, 13, 16) suivant la longueur de carcasse déterminée par le détecteur (4), caractérisé en ce que le détecteur (4) comprend un dispositif (20) mobile vers le haut et vers le bas et présentant une partie supérieure réalisée sous forme de poutrelle horizontale (23) destinée à détecter le niveau des pattes antérieures (25) de chaque carcasse (17) par contact par-dessous avec elles, le niveau de fonctionnement d'un ou plusieurs des dispositifs de traitement superficiel (7, 8, 12, 13, 16) étant réglé d'après le niveau détecté.

2. Appareil selon la revendication 1, dans lequel les carcasses (17) sont suspendues à des jambiers (18), caractérisé en ce que la surface supérieure de la poutrelle (23) faisant face aux pattes antérieures (25) des carcasses est en matériau conducteur de l'électricité (24) isolé de la poutrelle, ledit matériau (24) constituant une électrode d'un circuit détecteur électrique, tandis qu'un jambier (18) constitue l'autre électrode de ce circuit.

3. Appareil selon la revendication 2, caractérisé en ce que la surface supérieure de la poutrelle (23) a une longueur sensiblement supérieure à l'écartement horizontal normal entre les pattes antérieures (25) d'une carcasse.

4. Appareil selon la revendication 1, caractérisé en ce que le détecteur (4) et les moyens de réglage comprennent une rangée de doigts (22, 29) à espacement uniforme et un compteur fixe (21, 30) actionné par le déplacement vers le haut et vers le bas de la rangée de doigts (22, 29).

5. Appareil selon toute revendications précédente pour le brossage à l'aide de brosses cylindriques horizontales, caractérisé en ce qu'il comprend un dispositif de brossage de front (7), un dispositif opposé de brossage de l'avant du poitrail (8), un dispositif de brossage de cou (12) faisant suite au dispositif de brossage de front dans le sens de déplacement des carcasses, un dispositif opposé de brossage de jarrets antérieurs-cou (13), un dispositif (14) propre à faire pivoter chaque jambier (18) de 180° et un autre dispositif de brossage de jarrets antérieurs-cou (16) faisant suite au dispositif de brossage de cou (12).

6. Appareil selon toute revendication précédente, caractérisé en ce qu'au moins un dispositif de traitement superficiel (7, 8, 12, 13, 16) se prête à être amené en position initiale haute ou basse après le traitement de toute carcasse donnée.

7. Appareil selon la revendication 5 ou 6, caractérisé en ce que le dispositif de brossage de l'avant du poitrail (8) se prête à être amené en position initiale haute, tandis que les autres dispositifs de brossage (7, 12, 13, 16) se prêtent à être amenés en position initiale basse après traitement de toute carcasse donnée.

8. Appareil selon toute revendication précédente, caractérisé en ce qu'après réglage d'après la longueur de la carcasse, au moins un dispositif de traitement superficiel (8) est déplacé vers le haut et vers le bas pendant le traitement de toute carcasse donnée.

9. Appareil selon la revendication 8, caractérisé en ce que 'amplitude de mouvement vers le haut et vers le bas du dit dispositif (8) est déterminée d'après la longueur de carcasse mesurée.

FIG. 1

FIG. 3

FIG. 2